# EUROPÄISCHE PATENTSCHRIFT

(11) **EP 1 650 107 B1**
(45) Veröffentlichungstag und Bekanntmachung des Hinweises auf die Patenterteilung: **10.12.2008**
(21) Anmeldenummer: 05022626.5
(22) Anmeldetag: 18.10.2005
(51) Int. Cl.: B62D 5/083, B62D 5/097

(54) **Drehschiebersteuerventil für eine hydraulische Lenkeinrichtung**
Rotary slide valve for a hydraulic steering device
Soupape a tiroir rotatif pour dispositif de direction hydraulique

(30) Priorität: 21.10.2004 DE 102004051282
(43) Veröffentlichungstag der Anmeldung: 26.04.2006
(73) Patentinhaber: Bosch Rexroth AG, 70184 Stuttgart (DE)
(72) Erfinder: Bergmann, Erhard, Dr., 19079 Mirow (DE); Voß, Gerhard, 19370 Parchim (DE); Voßberg, Hartmut, 19370 Parchim (DE); Krauße, Steffen, 19370 Parchim (DE)
(74) Vertreter: Jaap, Reinhard

(56) Entgegenhaltungen:
- DE-A1- 4 204 336
- DE-A1- 19 935 021

## Beschreibung

Die Erfindung bezieht sich auf ein Drehschiebersteuerventil nach dem Oberbegriff des Anspruchs 1.
Solche Drehschiebersteuerventile kommen vorzugsweise bei vollhydraulischen Lenkeinrichtungen zur Anwendung, die vorzugsweise zum Lenken von schweren und langsam laufenden Fahrzeugen eingesetzt werden.

Eine solche vollhydraulische Lenkeinrichtung mit einem solchen Drehschiebersteuerventil wird beispielsweise in der DE 42 04 336 C2 beschrieben.
Dabei besteht die vollhydraulische Lenkeinrichtung grundsätzlich aus dem Drehschiebersteuerventil und einer nach dem Orbitprinzip arbeitenden Verdrängereinheit, die beide miteinander zu einer Einheit verschraubt sind. Die beweglichen Teile der Verdrängereinheit und des Drehschiebersteuerventils sind mechanisch über eine kardanisch arbeitende Antriebswelle verbunden, die die von Hand in das Drehschiebersteuerventil eingeleitete Drehbewegung auf den Rotor der Verdrängereinheit überträgt.
Das Drehschiebersteuerventil besteht aus einem Gehäuse, einer äußeren und im Gehäuse eingepassten Steuerhülse und einem inneren, in der Steuerhülse laufenden Steuerkolben. Dabei sind der Steuerkolben und die Steuerhülse in ihrer Drehbewegung durch ein Federelement gegeneinander zentriert und durch einen mechanischen Anschlag begrenzt zueinander drehbar.
Die äußere Steuerhülse besitzt mehrere Reihen von radialen und gleichmäßig am Umfang verteilten Steuerbohrungen, die in verschienen radialen Ebenen angeordnet sind, während der innere Steuerkolben mehrere gleichmäßig am Umfang verteilte axiale Steuernuten unterschiedlicher Länge besitzt, die die Reihen von Steuerbohrungen der verschiedenen Ebenen in der Steuerhülse miteinander verbinden. Durch diese Anordnung der Steuerbohrungen und Steuernuten wird die Verdrängereinheit saugseitig mit der Versorgungspumpe und druckseitig mit dem Lenkzylinder verbunden. Außerdem verbinden die Steuerbohrungen und Steuernuten den Lenkzylinder ablaufseitig mit dem Ablauftank.
Zur Vermeidung von Druckschwankungen in der hydraulischen Lenkanlage, die beispielsweise durch die Impulse der Versorgungspumpe, durch eine ruppige Anlenkung oder durch sprunghafte Bewegungen des Lenkzylinders entstehen können und die durch die vielen veränderlichen Drosselstellen des Drehschiebersteuerventils noch verstärkt werden können, sind konstante Drosselstellen erforderlich. Diese konstanten Drosselstellen verhindern innerhalb bestimmter Grenzen eine Einflussnahme der Druckschwankungen auf die Verdrängereinheit. Dazu sind die axialen Steuernuten, die die radialen Steuerbohrungen in der Steuerhülse für die Verdrängereinheit mit den zutreffenden Steuerbohrungen in der Steuerhülse für den Lenkzylinder verbinden, über ihre ganze axiale Länge als Drosselkanäle ausgeführt. Dabei bestimmt sich der Drosselquerschnitt der axialen Steuernuten allein durch die Wahl der Tiefe der Steuernuten, weil die Breite der Steuernuten auf die Durchmesser der Steuerbohrungen in der äußeren Steuerhülse abgestimmt bleiben muss. Um einen wirksam dämpfenden Drosselquerschnitt zu erhalten, ist die Tiefe der Steuernuten sehr gering gewählt.
Das hat zunächst fertigungstechnische Nachteile, weil dieses geringe Tiefenmaß sehr eng toleriert werden muss. Dazu kommt, dass dieses geringe Tiefenmaß über eine relativ große Länge realisiert werden muss. Das ist fertigungstechnisch sehr problematisch. Nachteilig ist auch, dass in der Drosselwirkung unterschiedliche Drosselwerte zwischen dem linken Ausschlag und dem rechten Ausschlag des Lenkzylinders auftreten, weil die beiden betreffenden Ebenen der radialen Steuerbohrungen in der Steuerhülse unterschiedlich weit von der Ebene der radialen Steuerbohrungen für die Verdrängereinheit entfernt liegen.

Besonders nachteilig ist aber die starke Viskositätsabhängigkeit der drosselnden Steuernuten, die in Abhängigkeit von der Temperatur des Öles zu unterschiedlichen Drosselwerten führt.

Eine vollhydraulische Lenkeinrichtung mit einem ähnlichen Aufbau ist auch aus der DE 199 35 021 A1 bekannt. Diese Lenkeinrichtung ist sowohl für die Reaktion-Funktion als auch für die Non-Reaktion-Funktion ausgelegt. Dazu besitzt die Lenkeinrichtung innerhalb der Steuereinrichtung für jede Lenkrichtung zwei getrennte Kreisläufe, von denen einer in der Neutralstellung durch ein separates Schaltventil abgesperrt werden kann. Diese beiden Kreisläufe verlangen unterschiedliche Nutbreiten im Steuerkolben, die aber nicht als Drosselstellen wirken.

Der Erfindung liegt daher die Aufgabe zu Grunde, die als Drossel wirkenden axialen Steuernuten zwischen der Verdrängereinheit und dem Lenkzylinder einer gattungsgemäßen vollhydraulischen Lenkeinrichtung unabhängig von der Lenkrichtung des Lenkzylinders und weitestgehend unabhängig von der Viskosität des Hydrauliköles zu gestalten.

Diese Aufgabe wird durch die kennzeichnenden Merkmale des Anspruches 1 gelöst. Zweckmäßige Ausgestaltungen ergeben sich aus den Unteransprüchen 2 bis 4.

Das neue Drehschiebersteuerventil beseitigt die genannten Nachteile des Standes der Technik.

So ist die neue Drosselbleride sehr einfach herzustellen, weil zur Gestaltung und zur Optimierung des Drosselquerschnittes nicht mehr nur das fertigungstechnisch schwer zu realisierende Tiefenmaß, sondern auch die Breite berücksichtigt werden kann. Die Einbeziehung der Breite und der Tiefe ermöglicht eine optimale Drosselquerschnittsgestaltung, wobei die konstruktiven Abmessungen fertigungstechnisch beherrschbar bleiben. Dadurch wird es auch möglich, alle parallelen Drosselblenden mit einem gleichgroßen Drosselquerschnitt auszuführen. Durch die Gestaltung der Drosselstelle in Form einer Blende, bleibt die Drossellänge der Drosselblende ohne Einfluss auf die Drosselwirkung. Das ist von einem besonderen funktionellen Vorteil, weil die Länge der Drosselstelle praktisch aus der Berechnung der Drosselwirkung eliminiert ist und weil damit die Drosselwirkung für beide radialen Ebenen der Steuerbohrungen für den Lenkzylinder gleich groß ist. Das macht die Drosselwirkung unabhängig vom Links- oder Rechtseinschlag der Lenkung und von der Temperatur und damit von der Viskosität des Hydrauliköles.

Es ist zweckmäßig, wenn die Drosselblende einen rechteckigen Querschnitt erhält, weil das fertigungstechnisch einfach ist und sich das technologisch gut in die Fertigung deraxialen Steuernuten einordnen lässt. Es ist auch zweckmäßig, wenn die Drossellänge der Drosselblende dem Mindestmaß der Dichtlänge am Umfang des Steuerkolbens zwischen der Verdrängerzulaufnut und der Zylinderzulaufnut angepasst wird. Dadurch erhält auch die Drossellänge der Drosselblende ihr Mindestmaß.
Es ist aber auch zweckmäßig, wenn die Drossellänge der Drosselblende von den radialen Ausläufen der Verdrängerablaufnut und der Zylinderzulaufnut unter Beachtung der erforderlichen Dichtlänge am Umfang des Steuerkolbens bestimmt wird. Dadurch wird die Drossellänge der Drosselblende nur unwesentlich größer als die Dichtlänge des Steuerkolbens, vereinfacht aber die Fertigung, weil dann die axialen Steuernuten wie bis her mit einem Scheibenfräser hergestellt werden können.

Die Erfindung soll anhand eines Ausführungsbeispieles näher erläutert werden.
Dazu zeigen
- Fig. 1:: eine Schnittdarstellung der vollhydraulischen Lenkeinrichtung,
- Fig. 2:: eine Ansicht des inneren Steuerkolbens des Drehschiebersteuerventils,
- Fig. 3:: eine vergrößerte Teilansicht des inneren Steuerkolbens,
- Fig. 4:: einen Teilschnitt der Ebene A-A gemäß der Fig. 3 und
- Fig. 5:: einen Teilschnitt der Ebene B-B gemäß der Fig. 3.

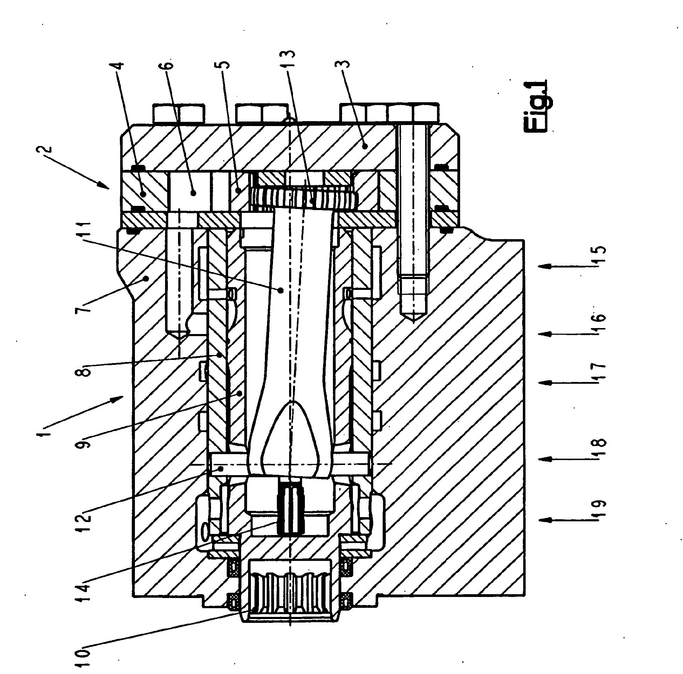

Die vollhydraulische Lenkeinrichtung gemäß der Fig. 1 besteht aus dem Drehschiebersteuerventil 1 und einer Verdrängereinheit 2, wobei die Verdrängereinheit 2 mit Hilfe eines Deckels 3 stirnseitig am Drehschiebersteuerventil 1 verschraubt ist.
Die Verdrängereinheit 2 arbeitet nach dem Orbitprinzip und besteht aus einem Außenring 4 mit beispielsweise sieben nach innen gerichteten Zähnen und einem innen liegenden Läuferzahnrad 5 mit dann sechs nach außen gerichteten Zähnen. Durch die unterschiedliche Zähnezahl ergibt sich zwischen dem Außenring 4 und dem Läuferzahnrad 5 eine bestimmte Exzentrizität und damit sieben volumenveränderliche Kammern 6.
Das Drehschiebersteuerventil besteht aus einem Gehäuse 7 mit einer im Gehäuse 7 mit Spiel eingepassten äußeren Steuerhülse 8 und einem in der Steuerhülse 8 laufenden Steuerkolben 9. Der innen liegende Steuerkolben 9 hat einerseits über eine Zahnkupplung 10 eine drehfeste Verbindung mit einem nicht dargestellten Handrad. Außerdem befindet sich innerhalb des Steuerkolbens 9 eine Kardanwelle 11, die einerseits über einen, den Steuerkolben 9 durchdringenden Stift 12 mit der äußeren Steuerhülse 8 und andererseits über ein balliges Zahnnabenprofil 13 mit dem Läuferzahnrad 5 der Verdrängereinheit 2 verbunden ist. Der Stift 12 begrenzt im Zusammenspiel mit einer vergrößerten Bohrung im inneren Steuerkolben 9 den Verdrehwinkel zwischen der äußeren Steuerhülse 8 und dem inneren Steuerkolben 9. Dabei stützen sich die äußere Steuerhülse 8 und der innere Steuerkolben 9 gegenseitig durch ein radial angeordnetes Federelement 14 ab.

Zur hydraulischen Verbindung der sich vergrößernden Kammern 6 der Verdrängereinheit 2 mit einer Versorgungspumpe einerseits und der sich verkleinernden Kammern 6 der Verdrängereinheit 2 mit einem Lenkzylinder andererseits sowie zur Verbindung des sich verkleinernden Zylinderraumes des Lenkzylinders mit einem Ablauftank sind das Gehäuse 7, die äußere Steuerhülse 8 und der innere Steuerkolben 9 mit radialen und axialen Kanälen ausgestattet.

Dazu befindet sich in der äußeren Steuerhülse 8 in einer ersten radialen Ebene 15 eine Reihe von gleichmäßig am Umfang verteilten Steuerbohrungen für den Zulauf von einer Versorgungspumpe zur Verdrängereinheit 2. In einer zweiten radialen Ebene 16 ist eine Reihe von gleichmäßig am Umfang verteilt angeordneten Steuerbohrungen für den Zulauf zur und den Rücklauf von der Verdrängereinheit 2 vorgesehen. Weiterhin besitzt die äußere Steuerhülse 8 in einer dritten radialen Ebene 17 und in einer vierten radialen Ebene 18 jeweils eine Reihe von gleichmäßig am Umfang verteilten Steuerbohrungen, die in Abhängigkeit von der Lenkrichtung das Hydrauliköl von der Verdrängereinheit 2 zum Lenkzylinder hinführen oder vom Lenkzylinder zum Ablauftank wegführen. Eine in einer fünften radialen Ebene 19 angeordnete Reihe von gleichmäßig am Umfang verteilten Steuerbohrungen verbindet den sich jeweils verkleinernden Zylinderraum des Lenkzylinders mit dem Ablauftank.

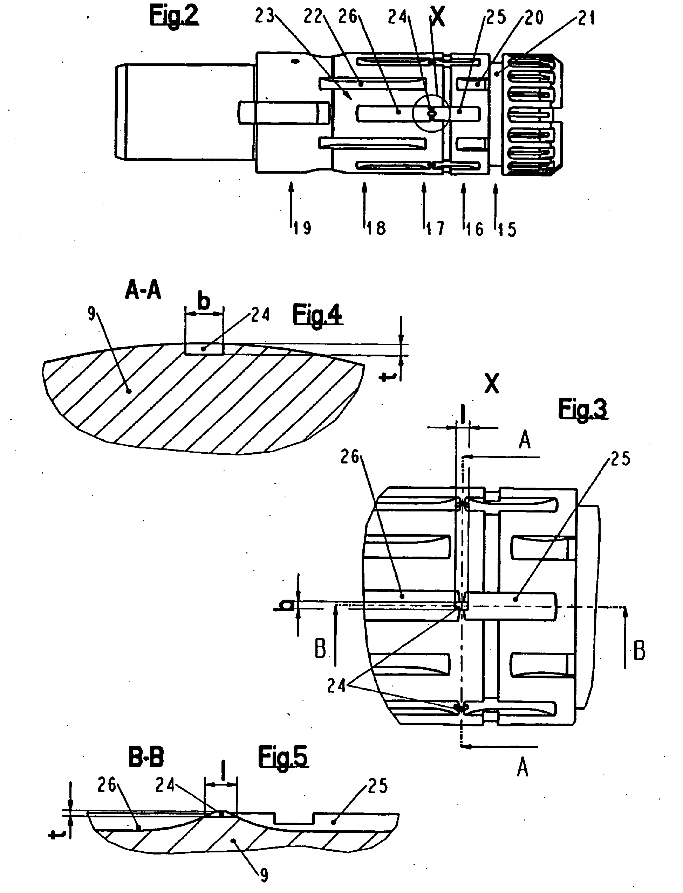

Zur Verbindung der verschiedenen, in unterschiedlichen Ebenen angeordneten Steuerbohrungen in der äußeren Steuerhülse 8 ist der innere Steuerkolben 9 mit mehreren, gleichmäßig am Umfang verteilten axialen Steuernuten ausgestattet. Gemäß der Fig. 2 unterscheiden sich diese axialen Steuernuten in der Länge, in ihrer Anordnung und teilweise in der Breite.

So besitzt der innere Steuerkolben 9 mehrere axiale Steuernuten 20 mit einer begrenzten axialen Länge, die zusammen mit einer Umfangsnut 21 die Steuerbohrungen der Steuerhülse der ersten radialen Ebene 15 mit den Steuerbohrungen der zweiten radialen Ebene 16 verbinden.

In der gleichen Teilung und in der gleichen axialen Ebene wie die Steuernuten 20 befinden sich axiale Steuernuten 22 mit einer begrenzten axialen Länge, die die Verbindung zwischen den Steuerbohrungen der dritten radialen Ebene 17 oder der vierten radialen Ebene 18 mit den Steuerbohrungen der fünften radialen Ebene 19 herstellen.

Außerdem besitzt der innere Steuerkolben 8 mehrere axiale Steuernuten 23 mit einer begrenzten axialen Länge, die in gleicher Teilung wie die Sternuten 20 und 22 aber in einer dazwischen liegenden axialen Ebene angeordnet sind. Diese Steuernuten 23 verbinden die Steuerbohrungen der zweiten radialen Ebene 16 in Abhängigkeit von der Lenkrichtung entweder mit den Steuerbohrungen der dritten radialen Ebene 17 oder der vierten radialen Ebene 18.

In jeder dieser axialen Steuernuten 23 ist eine Drosselblende 24 angeordnet, die die axiale Steuernut 23 räumlich in eine Verdrängerablaufnut 25 und eine Zylinderzulaufnut 26 aufteilt und sie gleichzeitig über ihre Drosselöffnung miteinander verbindet. In den Fig. 3 bis 5 ist diese Drosselblende 24 näher dargestellt. Danach befinden sich die Drosselblenden 24 aller Steuernuten 23 zwischen der zweiten radialen Ebene 16 und der dritten radialen Ebene 17 der Steuerbohrungen der äußeren Steuerhülse 8. Der Querschnitt der Drosselblende 24 ist gemäß der Fig. 4 rechteckig ausgeführt, wobei die Drosselblende 24 gegenüber den Abmessungen des Querschnitts der Steuernuten 23 im Querschnitt eine schmalere Breite b aufweist und flacher in der Tiefe ausgeführt ist. Denkbar sind aber auch andere Querschnittsformen, wie beispielsweise die Dreiecksform einer Drosselkerbe. Die Länge der Drosselblende 24 ist auf ein Mindestmaß begrenzt, das sich grundsätzlich aus den gewählten Fertigungsverfahren ergibt. So werden die Verdrängerablaufnuten 25 und die Zylinderzulaufnuten 26 vorzugsweise mit einem Scheibenfräser hergestellt, sodass sich zu beiden Seiten der Drosselblende 24 entsprechende radiale Ausläufe ergeben. Diese radialen Ausläufe sind dann so beabstandet, dass am Umfang des Steuerkolbens 9 eine noch ausreichende Dichtlänge zwischen der Verdrängerablaufnut 25 und der Zylinderzulaufnut 26 verbleibt. Aus den radialen Ausläufen der Verdrängerablaufnut 25 und der Zylinderzulaufnut 26 sowie aus der gewählten Dichtlänge am Umfang des Steuerkolbens ergibt sich eine in der Fig. 5 vermerkte Drossellänge 1.

Die Funktion der vollhydraulischen Lenkeinrichtung und damit die Funktion des Drehschiebersteuerventils sind hinreichend bekannt, sodass hier nur die wesentlichen Abläufe wiedergegeben werden müssen.

Bei nicht betätigter Lenkung sind der innere Steuerkolben 8 und die äußere Steuerhülse 9 durch das Federelement 14 in ihrer Mittelstellung zentriert. In dieser Stellung fließt das Hydrauliköl über eine Kurzschlussverbindung ungenutzt in den Ablauftank zurück. Bei einer Betätigung des Handrades und bei einem Vorhandensein eines Lenkwiderstandes werden der innere Steuerkoben 9 und die äußere Steuerhülse 8 gegen die Kraft des Federelementes 14 relativ zueinander verstellt. Damit werden im Drehschiebersteuerventil Querschnitte frei gegeben, die den Zulaufstrom in einen von der Verdrängereinheit 2 in dosierter Form bereitgestellten Arbeitsstrom und einen verbleibenden Kurzschlussstrom aufteilen. Allein der Arbeitsstrom wird zur Verstellung des Lenkzylinders eingesetzt. Dabei gelangt der Arbeitsstrom über die Steuerbohrungen der Steuerhülse 8 in der zweiten radialen Ebene 16 in die Verdrängerablaufkanäle 25 des inneren Steuerkolbens 9, durchströmt die Drosselblenden 24 und gelangt durch die Zylinderzulaufnuten 26 in die radialen Steuerbohrungen der Steuerhülse 8 in der dritten radialen Ebene 17 oder, je nach der Lenkrichtung in die radialen Steuerbohrungen der vierten radialen Ebene 18. Der so zugeführte Arbeitsstrom verdrängt den Kolben des Lenkzylinders und befördert gleichzeitig das Hydrauliköl aus dem sich verkleinernden Zylinderraum des Lenkzylinders zum Drehschiebersteuerventil zurück. Dabei gelangt das Hydrauliköl über die radialen Steuerbohrungen der Steuerhülse 8 in der dritten radialen Ebene 17 oder der vierten radialen Ebene 18 in die axialen Steuernuten 22 des inneren Steuerkolbens 9 und weiter über die Steuerbohrungen der äußeren Steuerhülse 8 in der fünften radialen Ebene 19 zum Ablauftank zurück.

Beim Durchströmen des Arbeitsstromes durch die Drosselblende 24 wird dem zum Lenkzylinder fließenden Arbeitsstrom ständig und weitestgehend unabhängig von den Druckschwankungen in der hydraulischen Anlage ein konstanter Widerstand aufgebracht, der von der Verdrängereinheit 2 überwunden werden muss.

### Liste der Bezugszeichen

- 1: Drehschiebersteuerventil
- 2: Verdrängereinheit
- 3: Deckel
- 4: Außenring
- 5: Läuferzahnrad
- 6: Kammer
- 7: Gehäuse
- 8: Steuerhülse
- 9: Steuerkolben
- 10: Zahnkupplung
- 11: Kardanwelle
- 12: Stift
- 13: Zahnnabenprofil
- 14: Federelement
- 15: erste radiale Ebene
- 16: zweite radiale Ebene
- 17: dritte radiale Ebene
- 18: vierte radiale Ebene
- 19: fünfte radiale Ebene
- 20: Steuernut
- 21: Umfangsnut
- 22: Steuernut
- 23: Steuernut
- 24: Drosselblende
- 25: Verdrängerablaufnut
- 26: Zylinderzulaufnut

## Patentansprüche

1. Drehschiebersteuerventil für eine hydraulische Lenkeinrichtung, bestehend aus einem Gehäuse (7) mit einer äußeren, mit Spiel im Gehäuse (7) eingepassten Steuerhülse (8) und einem im Inneren der Steuerhülse (8) laufenden Steuerkolben (9), wobei der innere Steuerkolben (9) einerseits mit einem Handlenkrad und andererseits über eine Kardanwelle (11) mit dem Läuferzahnrad (5) einer Verdrängereinheit (2) verbunden ist, der innere Steuerkolben (9) und die äußere Steuerhülse gegen die Kraft eines Federelementes (14) in einem begrenzten Winkel relativ zueinander verdrehbar sind und die äußere Steuerhülse (8) in mehreren radialen Ebenen (15, 16, 17, 18, 19) angeordnete Reihen von gleichmäßig am Umfang verteilten Steuerbohrungen und der innere Steuerkolben (9) mehrere gleichmäßig am Umfang verteilte axiale und ausgewählte Reihen von Steuerbohrungen der äußeren Steuerhülse (8) miteinander verbindende Steuernuten (20, 22, 23) besitzt,
**dadurch gekennzeichnet, dass** die die Steuerbohrungen der zweiten radialen Ebene (16) mit den Steuerbohrungen der dritten radialen Ebene (17) oder der vierten radialen Ebene (18) verbindenden axialen Steuernuten (23) des inneren Steuerkolbens (9) als Drosselkanäle ausgeführt sind und der Drosselkanal jeder axialen Steuernut (23) als eine Drosselblende (24) ausgebildet ist, die die axiale Steuernut (23) räumlich in eine Verdrängerablaufnut (25) und eine Zylinderzulauf (26) aufteilt und die Verdrängerablaufnut (25) und die Zylinderzulauf (26) hydraulisch miteinander verbindet, wobei die Drosselblende (24) im Bereich zwischen der zweiten radialen Ebene (16) der Steuerbohrungen der äußeren Steuerhülse (8) und der dritten radialen Ebene (17) der Steuerbohrungen der äußeren Steuerhülse (8) angeordnet ist.

2. Drehschiebersteuerventil nach Anspruch 1,
**dadurch gekennzeichnet, dass** die Drosselblende (24) einen rechteckigen Querschnitt besitzt.

3. Drehschiebersteuerventil nach Anspruch 1,
**dadurch gekennzeichnet, dass** die Drossellänge (1) der Drosselblende (24) von der erforderlichen, die Verdrängerzulaufnut (25) von der Zylinderzulaufnut (26) trennende Dichtlänge am Umfang des inneren Steuerkolbens (9) bestimmt wird.

4. Drehschiebersteuerventil nach Anspruch 3,
**dadurch gekennzeichnet, dass** die Drossellänge (1) der Drosselblende (24) größer als die Dichtlänge am Umfang des inneren Steuerkolbens (9) ausgelegt ist und von den radialen, durch die Fertigung bedingten Ausläufen der Verdrängerablaufnut (25) und der Zylinderzulaufnut (26) bestimmt wird.

## Claims

1. Rotary slide control valve for a hydraulic steering device, comprising a housing (7) having an outer control sleeve (8) which is fitted with play in the housing (7) and a control piston (9) which moves inside the control sleeve (8), the inner control piston (9) being connected, on the one hand, to a hand steering wheel and, on the other hand, to the runner toothed wheel (5) of a displacement unit (2) by means of a cardan shaft (11), the inner control piston (9) and the outer control sleeve being able to be rotated relative to each other through a limited angle counter to the force of a resilient element (14), and the outer control sleeve (8) having, arranged in a plurality of radial planes (15, 16, 17, 18, 19), rows of control holes which are distributed in a uniform manner at the periphery and the inner control piston (9) having a plurality of axial and selected rows of control grooves (20, 22, 23) which connect control holes of the outer control sleeve (8) to each other, which rows are distributed in a uniform manner at the periphery,
**characterised in that** the axial control grooves (23) of the inner control piston (9) which connect the control holes of the second radial plane (16) to the control holes of the third radial plane (17) or the fourth radial plane (18) are constructed as throttle channels and the throttle channel of each axial control groove (23) is constructed as a throttle aperture (24) which divides the axial control groove (23) spatially into a displacement means discharge groove (25) and a cylinder supply (26) and which connects the displacement means discharge groove (25) and the cylinder supply (26) hydraulically to each other, the throttle aperture (24) being arranged in the region between the second radial plane (16) of the control holes of the outer control sleeve (8) and the third radial plane (17) of the control holes of the outer control sleeve (8).

2. Rotary slide control valve according to claim 1,
**characterised in that** the throttle aperture (24) has a rectangular cross-section.

3. Rotary slide control valve according to claim 1,
**characterised in that** the throttle length (1) of the throttle aperture (24) is determined by the required seal length at the periphery of the inner control piston (9) that separates the displacement means supply groove (25) from the cylinder supply groove (26).

4. Rotary slide control valve according to claim 3,
**characterised in that** the throttle length (1) of the throttle aperture (24) is configured so as to be greater than the seal length at the periphery of the inner control piston (9) and is determined by the production-related radial run-outs of the displacement means discharge groove (25) and the cylinder supply groove (26).

## Revendications

1. Distributeur à tiroir rotatif pour une installation de direction hydraulique comprenant
un boîtier (7) muni d'un manchon de commande (8), extérieur, ajusté avec du jeu dans le boîtier (7) et un piston de commande (9), mobile à l'intérieur du manchon de commande (8),
le piston de commande intérieur (9) étant relié d'un côté, à un volant de direction et de l'autre, par un arbre à cardan (11) au pignon denté de rotor (5) d'une unité de refoulement (2), le piston de commande intérieur (9) et le manchon de commande extérieur pouvant tourner l'un par rapport à l'autre suivant un angle limité, contre la force d'un élément de ressort (14) et le manchon de commande extérieur (8) comporte, dans plusieurs plans radiaux (15, 16, 17, 18, 19), des rangées de perçages de commande réparties régulièrement en périphérie et le piston de commande intérieur (9) comporte plusieurs rangées axiales de rainures de commande (20, 22, 23) réparties régulièrement à la périphérie, et reliant des rangées sélectionnées de perçages de commande du manchon de commande extérieur (8),
**caractérisé en ce que**
les rainures de commande axiales (23) du piston de commande intérieur (9) reliant les perçages de commande du second plan radial (16) aux perçages de commande du troisième plan radial (17) ou du quatrième plan radial (18) sont réalisées sous la forme de canaux d'étranglement et
le canal d'étranglement de chaque rainure de commande axiale (23) est réalisé comme un diaphragme d'étranglement (24) divisant le volume de la rainure de commande axiale (23), en une rainure de sortie de refoulement (25) et une arrivée de cylindre (26) et
la rainure de sortie de refoulement (25) et l'arrivée de cylindre (26) sont reliées hydrauliquement,
le diaphragme d'étranglement (24) étant situé dans la zone comprise entre le second plan radial (16) des perçages de commande du manchon de commande extérieur (8) et le troisième plan radial (17) des perçages de commande du manchon de commande extérieur (8).

2. Distributeur à tiroir rotatif selon la revendication 1,
**caractérisé en ce que**
le diaphragme d'étranglement (24) a une section rectangulaire.

3. Distributeur à tiroir rotatif selon la revendication 1,
**caractérisé en ce que**
la longueur d'étranglement (1) du diaphragme d'étranglement (24) est définie à partir de la longueur d'étanchéité, nécessaire pour séparer la rainure de sortie de refoulement (25) de la rainure d'arrivée de cylindre (26) à la périphérie du piston de commande intérieur (9).

4. Distributeur à tiroir rotatif selon la revendication 3,
**caractérisé en ce que**
la longueur d'étranglement (1) du diaphragme d'étranglement (24) est supérieure à la longueur d'étanchéité à la périphérie du piston de commande intérieur (9) et par les sorties radiales nécessaires pour la réalisation de la rainure de sortie de refoulement (25) et de l'arrivée de cylindre (26).
